Europäisches Patentamt

(19) European Patent Office

Office européen des brevets

(11) **EP 0 929 920 B1**

(12) **EUROPÄISCHE PATENTSCHRIFT**

(45) Veröffentlichungstag und Bekanntmachung des Hinweises auf die Patenterteilung:
**04.12.2002 Patentblatt 2002/49**

(51) Int Cl.7: **H01S 3/06**, H01S 3/098, G02B 6/16

(21) Anmeldenummer: **97942924.8**

(22) Anmeldetag: **13.09.1997**

(86) Internationale Anmeldenummer:
**PCT/EP97/05021**

(87) Internationale Veröffentlichungsnummer:
**WO 98/015040 (09.04.1998 Gazette 1998/14)**

(54) **VERFAHREN ZUR KOMPENSATION DER DISPERSION VON FASERLASERN AUF FLUORIDBASIS IM ZWEITEN OPTISCHEN FENSTER**

METHOD OF COMPENSATING THE DISPERSION OF FLUORIDE-BASED FIBRE LASERS IN THE SECOND OPTICAL WINDOW

PROCEDE DE COMPENSATION DE LA DISPERSION DE LASERS A FIBRES A BASE DE FLUORURE DANS LA SECONDE FENETRE OPTIQUE

(84) Benannte Vertragsstaaten:
**AT BE CH DE DK ES FI FR GB GR IE IT LI LU MC NL PT SE**

(30) Priorität: **30.09.1996 DE 19641522**

(43) Veröffentlichungstag der Anmeldung:
**21.07.1999 Patentblatt 1999/29**

(73) Patentinhaber: **Deutsche Telekom AG**
**53113 Bonn (DE)**

(72) Erfinder:
• **VOBIAN, Joachim**
 **D-64367 Mühltal (DE)**
• **BONESS, Reiner**
 **D-01640 Coswig (DE)**
• **DÖRING, Heinz**
 **D-09648 Mittweida (DE)**
• **PEUPELMANN, Jens**
 **D-09599 Freiberg (DE)**
• **SCHMIETAINSKI, Uwe**
 **D-71282 Hemmingen (DE)**

(56) Entgegenhaltungen:
 **US-A- 4 835 778**

• **GUY M J ET AL: "Femtosecond soliton generation in a praseodymium fluoride fiber laser" OPTICS LETTERS, 1 JUNE 1994, USA, Bd. 19, Nr. 11, ISSN 0146-9592, Seiten 828-830, XP002051695**

• **PATACA D M ET AL: "ACTIVELY MODELOCKED PR3+-DOPED FLUORIDE FIBRE LASER" ELECTRONICS LETTERS, Bd. 30, Nr. 12, 9.Juni 1994, Seite 964/965 XP000459784**

• **VENGSARKAR A M ET AL: "Fundamental-mode dispersion-compensating fibers: design considerations and experiments" OFC '94. OPTICAL FIBER COMMUNICATION. VOL.4. 1994 TECHNICAL DIGEST SERIES. CONFERENCE EDITION (IEEE CAT. NO.94CH3422-3), 1994 CONFERENCE ON OPTICAL FIBER COMMUNICATION - OFC'94, SAN JOSE, CA, USA, 20-25 FEB. 1994, ISBN 1-55752-321-5, 1994, WASHINGTON, DC, USA, OPT. SOC. AMERICA, USA, Seiten 225-227, XP002051696 in der Anmeldung erwähnt**

• **BONESS R ET AL: "Tailoring of dispersion-compensation fibres with high compensation ratios up to 30" COST WORKSHOP 94: OPTICAL TELECOMMUNICATIONS. FIBRES AND COMPONENTS FOR SYSTEM APPLICATIONS: PRESENT AND FUTURE, NICE, FRANCE, 17-21 APRIL 1994, Bd. 4, Nr. 4, ISSN 0963-9659, PURE AND APPLIED OPTICS, JULY 1995, UK, Seiten 333-344, XP002051697 in der Anmeldung erwähnt**

EP 0 929 920 B1

**Beschreibung**

Bei Faserlasern im zweiten optischen Fenster werden Fluoridgläser (ZBLAN) anstatt von Gläsern auf Quarzbasis verwendet. Im allgemeinen wird $Pr^{3+}$ als Dotierungsmaterial verwendet. Siehe

[1] Ohishi, Y., Kanamori T., Takahashi, S.: $Pr^{3+}$-doped fluoride single-mode fiber laser. IEEE Photonics Technol. Lett., 3 (1991), 688

[2] Hodel, W.: Aufbau eines Festkörperlasers im 1300nm Wellenlängenbereich. Zwischenbericht zum Forschungsauftrag Nr. 283 der GD PTT Uni Bern, 30. Nov. 1993

[3] Döring H., Peupelmann J., Wenzel F.: $Pr^{3+}$-doped 1.3µm fibre laser using direct coated dichroitic mirrors. Electr. Lett. 31 (1995) 13, 1068

Diese Fasern haben eine Nulldispersionswellenlänge im dritten optischen Fenster, im zweiten optischen Fenster ist die Dispersion stark negativ. Benutzt man den Faserlaser als Solitonenquelle oder als Strahlungsquelle ultrahochbitratiger, linearer Übertragungssysteme, muß die zeitliche Breite der Impulse möglichst klein sein (<5-10 ps). Mit steigender Dispersion verbreitert sich der Impuls in zunehmenden Maße. Es bietet sich an, die Dispersion der Fluoridglasfaser zu kompensieren. Die einfachste und effektivste Möglichkeit ist die Verknüpfung der aktiven Faser mit einer dispersionskompensierenden (DC-) Faser, wobei die Dispersionswerte $D(\lambda)$ in ps / km nm von gleicher Größenordnung sein sollten, aber natürlich gegensätzliche Vorzeichen haben müssen. Beide Fasern sind Bestandteil des Faserresonators. Daraus folgt, daß die DC-Faser möglichst kurz sein sollte, um die Resonatorverluste zu minimieren.

Die zeitliche Halbwertsbreite ($t_p$) von Faserlasern kann mit Hilfe der Theorie von Kuizenga-Siegman und mit der Erweiterung von Geister berechnet werden.

[4] Siehe Kuizenga, D. J., Siegman, A. E.: FM and AM Mode-Locking of the Homogeneous Laser - Part I: Theory. IEEE J. Quant. Electr. 6 (1970), 694.

[5] Geister, G. Integrierte optische Modulation von Neodym-Faserlasern. Fortschritts-Berichte VDI Reihe 10 (1990) 140, 1, 102.

$$\tau_p = \frac{\sqrt{2\sqrt{2}\ln 2}}{\pi}\left[\frac{1}{f_m^2\,\delta_c}\right]^{1/4}\left[\left(\frac{\lambda^2 L_a}{2\pi c}D\right)^2 + \left(\frac{g}{\pi^2\Delta f^2}\right)^2\right]^{1/8} \qquad (1)$$

Die Halbwertsbreite $t_p$ hängt also ab von der Modulationsfrequenz $f_m$, dem Modulationsindex $\delta_c$, von der Laserwellenlänge $\lambda$, der Länge $L_a$ der aktiven Faser, dem Gewinnkoeffizienten g, der spektralen Halbwertsbreite $\Delta\lambda$ des Fluoreszenzspektrums (entsprechend $\Delta f$) und der chromatischen Dispersion D der Faser. Die Modulationsfrequenz, der Modulationsindex, die Laserwellenlänge, der Gewinnkoeffizient und das Fluoreszenzspektrum sind entweder Materialkonstanten oder vorgegebene Parameter, also nicht beeinflußbar. Die Faserlänge $L_a$ wird für den Laserbetrieb optimiert, ist also auch eine Konstante. So bleibt als einziger Parameter, den man beeinflussen kann, die chromatische Dispersion D, die im günstigsten Fall auf Null gebracht wird, um minimale Impulsbreiten zu erzielen. Das bedeutet, daß die Dispersion der aktiven Faser kompensiert werden muß. Das kann erreicht werden durch den Einsatz gechirpter Bragg-Fasergitter als Laserspiegel. Prinzipiell können Ein- oder Auskoppelspiegel als Bragg-Gitter realisiert werden. Wenn für beide Laserspiegel Gitter eingesetzt werden, müssen diese die gleiche Bragg-Wellenlänge haben. Das Reflexionsvermögen, insbesondere des Ausgangsspiegels, ist sehr genau einzuhalten, da sich andernfalls die Laserschwelle erhöht und die Ausgangsleistung verringert. Nach der Theorie von Kuizenga- Siegman- Geister, siehe Gleichung 1, nimmt die zeitliche Halbwertsbreite $\tau_p$ mit abnehmender Fluoreszenzbandbreite $\Delta f$ zu. Wenn die spektrale Breite der gechirpten Bragg-Gitter kleiner ist als die Fluoreszenzbandbreite, begrenzt diese die minimale Pulsbreite. Um die Pulsbreite bis zur theoretischen Grenze zu verkleinern, wäre eine spektrale Breite der Gitter von etwa 60nm erforderlich. Die Technologie der Gitterherstellung ist aber bisher noch längst nicht so weit, gechirpte Bragg-Fasergitter mit definiertem Reflexionsvermögen und hinreichend großer spektraler Bandbreite herzustellen.

Im Gegensatz dazu schlagen wir vor, die Dispersion durch Hinzufügung einer dispersionskompensierenden Faser im Resonator zu kompensieren. Die Dispersionskompensation durch DC-Fasern bei hochbitratigen Systemen ist im dritten optischen Fenster ein gängiges Verfahren. Siehe

[6] Vengsarkar, A. M., Miller, A. E. Gnauck, A. H., Reed, W. A. Walker K.: OFC 94, Technical Digest ThK2, San Jose 1994, 225

Man benötigt dann Kompensationsfasern mit hoher negativer Dispersion im dritten optischen Fenster, um die hohe positive Dispersion der Standardfasern zu kompensieren. In

[7] Boness, R. Nowak, W. Vobian, J. Unger, S. Kirchhof, J: Tailoring of dispersion-compensation fibres with high compensation ratios up to 30. Pure Appl. Opt. 5 (1995), 333 wurde eine iterative, inverse Methode zur Parameterbestimmung und zur Profiloptimierung vorgestellt, die für DC-Fasern mit hoher negativer Dispersion im dritten optischen Fenster vorgesehen ist.

Um die entsprechenden Parameter dieser speziellen Fasern zu bestimmen, muß ein sogenanntes inverses Problem gelöst werden. Das gelingt für einige vorgegebene Dispersionswerte nur, wenn man ein mehrvariables Optimierungsverfahren benutzt. Siehe

[8] Ortega, J. M. Rheinboldt, C.: Iterative Solution of Nonlinear Equations in Several Variables (New York, Academic 1970)

Man hat die generalisierte Standardabweichung zu minimieren, die gegeben ist durch:

$$F(x) = \sum_{i=1}^{n} b(D(\lambda_i, x) - D_i)^2 + b_{n+1}(\lambda_c(x) - \lambda_{c0})^2 + b_{n+2}(w_f(x, \lambda_0 - w_{f0})^2 \qquad (2)$$

bezüglich des unbekannten Vektors x.

x := Vektor der relativen Brechzahlindizes $2\Delta_i$ ($1 \le i \le$ **m**) und des Faserradius, somit ist dim(x) = m+1, im allgemeinen ist **m** ≤ 4.

$$2\Delta_i := \frac{n_i^2 - n_c^2}{n_c^2}$$

mit $n_c$- Brechzahlindex des äußeren Mantels, im allgemeinen, 1.4573.

$D_i$ := vorgegebene diskrete Dispersionswerte bei $\lambda_i$ ($1 \le i \le$ **n** mit n ≥ dim(x)).

$\lambda_{c0}$:= vorgegebener Cutoff der LP$_{11}$-Mode, $w_{f0}$ vorgegebener PETERMANN-II-Radius, $b_i$ :=geeignete positive Gewichtsfaktoren.

Um das Funktional G1.(2) zu minimieren, wird der Levenberg-Marquardt Algorithmus [8] (gedämpftes Gauß-Newton Verfahren) verwendet. Dieses Programm beruht auf einer sehr stabilen und genauen Methode zur Dispersionsberechnung auf der Basis der skalaren Wellengleichung, wobei numerische Differentiationen vermieden werden [7].

Im Falle der Faserlaser im zweiten optischen Fenster auf Fluoridglasbasis muß die hohe negative Dispersion bei λ = 1300 nm durch eine Kompensationsfaser mit entsprechend hoher positiver Dispersion kompensiert werden. Solche Fasern sind bisher nicht bekannt, das gilt auch für Faserprofile, die das Verlangte leisten.

Die Aufgabe, die durch das Verfahren gelöst wird besteht darin, eine Kompensationsfaser so zu manipulieren, daß durch sie die hohe negative Dispersion eines Faserlasers im zweiten optischen Fenster kompensiert werden kann.

Die Erfindung wird in dem unabhängigen Anspruch und zugehörigen abhängigen Ansprüchen definiert.

Im folgenden werden Parameter für Fasern mit einer positiven chromatischen Dispersion bei λ=1300 nm angegeben und einige grundlegende Eigenschaften beschrieben.

Für Stufenindexfasern ist bekannt, vgl. z. B. [9] Snyder, A. W. Love J. D.: Optical Waveguide Theory (London: Chapman and Hall, daß in die Wellenleiterdispersion der Dispersionsfaktor

$$DF = V * \frac{d^2(Vb)}{dV^2}$$

maßgebend das Verhalten der Wellenleiterdispersion bestimmt.

Bei V≈3 liegt wechselt DF das Vorzeichen und nimmt mit wachsendem V negative, jedoch betragsmäßig kleine Werte an, die darüber hinaus noch ein Minimum durchlaufen. Dieses typische Kurvenverhalten muß berücksichtigt werden. Bekannterweise breitet sich in einem Stufenindexwellenleiter für $V_c$>2.404 die LP$_{11}$-Welle aus,d. h. der Wellenleiter ist dann nicht mehr monomodig, d. h. man muß darauf achten, daß die Cutoff-Wellenlänge des LP$_{11}$-Modus $\lambda_{c11}$ nicht zu groß wird. Sie kann natürlich größer sein als die Betriebswellenlänge (1300 nm). Da die LP$_{11}$-Mode nur schlecht geführt wird, kann man sie durch Biegen der Faser stark dämpfen. Durch geeignete Dimensionierung der Faserparameter gelingt es, zu verhindern, daß der LP$_{02}$-Mode ausbreitungsfähig ist.

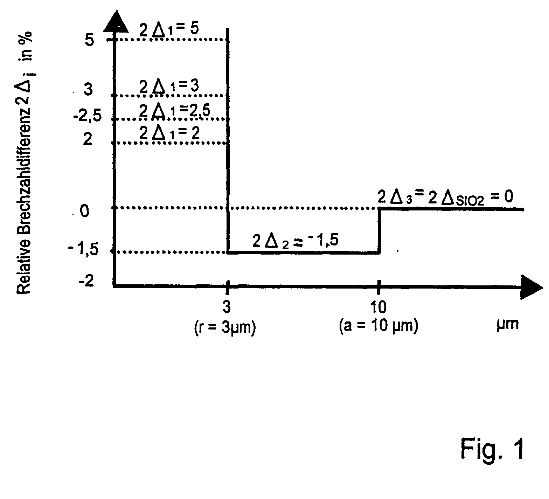

Zur Lösung des Problems, d. h. zur Erzielung hoher positiver Dispersionswerte schlagen wir folgendes Brechzahlprofil vor (Fig. 1):

Ein Stufenprofil, bei dem der Kern umgeben ist von einem abgesenktem Brechzahlgraben. Die Absenkung gelingt bekannterweise durch Fluordotierung. $2\Delta_2$ -Werte bis zu -1,5 (siehe Philips dispersionsflache Fasern) sind technologisch realisierbar.Das Profil von Fig. 1 wird definiert durch die Stufenhöhe $2\Delta_1$, die bezogen wird auf das Brechzahlniveau des äußeren Mantels, die Tiefe des Brechzahlgrabens (-2$\Delta_2$), den Stufenradius r und dem Kernradius a, jenseits von a bleibt die Brechzahl konstant. 2$\Delta$i ist durch folgende Gleichung definiert:

$$2\Delta_i = \left( \frac{n_i^2 - n_{SIO2}^2}{n_{SIO2}^2} \right)$$

Dabei ist

$n_i$ der Brechzahlindex des i-ten Brechzahlniveaus der Faser

$n_{SIO2}$ der Brechzahlindex einer Faser, bei der der Mantel aus reinem Quarzglas besteht.

In Fig. 1 ist das relative Brechzahlprofil (in %)von Stufenindexfasern mit abgesenktem Brechzahlgraben 2$\Delta_1$=5; 3, 2,5 und 2, 2$\Delta_2$=-1.5; a=10µm, r=3µm dargestellt.

Fig. 2 zeigt die Dispersionskurven der Fasern mit den Profilen aus Fig.1

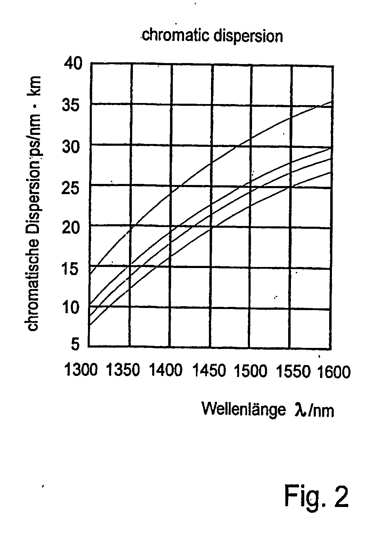

In Fig. 2 sind die berechneten Dispersionskurven aufgezeichnet, die den Profilen aus Fig. 1 entsprechen. Je höhere 2$\Delta_1$-Werte gewählt werden, desto höhere positive Dispersionswerte werden erreicht. Allerdings steigt auch mit 2$\Delta_1$ auch die Cutoff-Wellenlänge des LP11-Modus ($\lambda_{c11}$). Das ist natürlich unerwünscht, ein Kompromiß muß gefunden werden. Die Cutoff-Wellenlänge des $LP_{11}$-Modus wird jedoch durch den Brechzahlgraben abgesenkt.

In Tabelle 1 sind die berechneten relevanten Faserparameter zusammengestellt: die Feldradien Petermann I und II ($w_{pI}$ und $w_{pII}$), die MAC-Zahl, die Dispersionswerte, jeweils für $\lambda$=1310 nm und die Cutoff-Wellenlänge $\lambda_{c11}$ (a=10 µm, r=3 µm). 2$\Delta_2$ wurde mit -1.5 und -1 festgelegt. Man sieht, mit abnehmenden 2A$_1$-Werten nimmt sowohl D (1310nm) als auch $\lambda_{cII}$ ab, der erste Effekt ist natürlich unerwünscht, der zweite ist erwünscht. Als Kompromiß erscheint das Wertepaar 2$\Delta_1$ / 2A$_2$ = 2.5 / -1.5 bzw. 2$\Delta_1$ / 2$\Delta_2$ = 2.5 / -1 vernünftig zu sein. Man erkennt weiterhin, daß hohe negative 2$\Delta_2$-Werte günstig sind. Die Feldradien ändern sich nicht dramatisch.

Tabelle 1 zeigt den Einfluß der Stufenhöhe 2$\Delta$, und der Grabentiefe 2$\Delta_2$ auf den Dispersionswert bei 1300nm auf die Cutoff-Wellenlänge, die MAC-Zahl und auf die Feldradien Petermann I und II (=1210nm, a = 10µm, r = 3µm)

| 2$\Delta_1$/2$\Delta_2$ | $W_{PI}$(µm) | $W_{PI}$(µm) | MAC-No | D(ps/km∗nm) | $\lambda_{cII}$(nm) |
|---|---|---|---|---|---|
| 5/-1,5 | 2,4 | 2,3 | 1,86 | 15,27 | 2193 |
| 3/1,5 | 2,5 | 2,45 | 1,94 | 11,00 | 1635 |
| 2,5-1,5 | 2,55 | 2,5 | 1,98 | 9,57 | 1471 |
| 2/-1,5 | 2,6 | 2,55 | 2,02 | 7,95 | 1292 |
| Z-Faser | | 4,9 | | 0,81 | 1195 |
| 5/-1 | 2,4 | 2,3 | 1,82 | 14,34 | 2254 |
| 3/-1 | 2,55 | 2,5 | 1,52 | 9,56 | 1686 |
| 2,5/-1 | 2,6 | 2,55 | 1,72 | 7,94 | 1518 |
| 2/-1 | 2,7 | 2,6 | 2,01 | 6,07 | 1335 |

In Tabelle 1 wurden zum Vergleich die entsprechenden Daten einer Z-Faser von Sumitomo aufgenommen, eine Stufenindexfaser mit Quarzglaskern und fluordotiertem Mantel. Diese Faser hat zwar bei $\lambda$=1300nm ebenfalls eine positive Dispersion (0.8ps/km nm), die aber etwa um den Faktor 10 kleiner ist. Man würde also etwa die 10fache Kompensationsfaserlänge im Resonator benötigen. Allerdings ist die Z-Faser bei 1300nm einmodig im strengen Sinne.

Tabelle 2 zeigt die Variation von r bei konstantem a und Variation von a bei konstantem r ($\lambda$ =1310nm; a =10 µm; r = 3µm)

| a/r | $W_{PI}$(µm) | $W_{PII}$ (µm) | MAC-No. | D(ps/km∗nm) | $\lambda_{cII}$(nm) |
|---|---|---|---|---|---|
| 10/4,5 | 3,5 | 3,4 | 1,55 | 8,69 | 2283 |
| 10/4,0 | 3,2 | 3,1 | 1,59 | 9,04 | 2026 |
| 10/3,5 | 2,9 | 2,8 | 1,64 | 9,00 | 1771 |
| 8/3,5 | 2,5 | 2,4 | 1,76 | 6,96 | 1417 |
| 9/3,5 | 2,7 | 2,6 | 1,69 | 8,42 | 1594 |
| 10/3,5 | 2,9 | 2,8 | 1,64 | 9,00 | 1771 |

(fortgesetzt)

| a/r | $W_{PI}(\mu m)$ | $W_{PII}(\mu m)$ | MAC-No. | D(ps/km∗nm) | $\lambda_{cII}$(nm) |
|-----|-----|-----|-----|-----|-----|
| 11/3,5 | 3,1 | 3,0 | 1,60 | 9,09 | 1948 |

In Tabelle 2 wurde der Einfluß von a und r untersucht. Bei konstantem a (10µm) ist die Tendenz der D-Werte nicht einheitlich, generell kann man durch Variation von r in vernünftigen Grenzen D nicht wesentlich beeinflussen, die Cutoff-Wellenlänge hingegen nimmt mit abnehmenden r ab. Bei konstantem r wurde a variiert. Falls a nicht zu klein ist (z.B. =8µm) hat auch der a-Wert, variiert in vernünftigen Grenzen, keinen großen Einfluß auf D. Die Cutoff-Wellenlänge hingegen sinkt mit abnehmendem a.

Rechnungen zeigten, daß die Variation der Profilgestaltung keine wesentlich günstigeren Ergebnisse liefert. Tripleund Quadrupolprofile und Parabelprofile wurden untersucht. Das einfache Stufenprofil mit abgesenktem Brechzahlgraben ist hinreichend und technologisch am einfachsten zu verifizieren. In den Tabellen wurden nur solche Ausgangsparameter für die Berechnungen gewählt, die technologisch und physikalisch sinnvoll sind.

## Patentansprüche

1. Verfahren zur Kompensation der Dispersion von Faserlasern auf Fluoridbasis im zweiten optischen Fenster, wobei die hohe negative Dispersion des Faserlasers im zweiten optischen Fenster mit einer Kompensationsfaser ausgeglichen wird,
   **dadurch gekennzeichnet, daß** die aktive Faser des Faserlasers mit einer Kompensationsfaser verknüpft wird, die einen stufenförmigen Quarzglaskern besitzt, welcher in seinen äußeren Schichten einen Mantel ausgebildet hat, dessen Brechzahlniveau durch Fluordotierung gezielt zu einem Brechzahlgraben abgesenkt wurde, wobei der Grad der Absenkung des Brechzahlniveaus des Brechzahlgrabens zur Erreichung eines optimierten positiven Dispersionswertes der Kompensationsfaser nach der Beziehung

$$2\Delta_i = \left( \frac{n_i^2 - n_{SIO2}^2}{n_{SIO2}^2} \right)$$

   ermittelt wird, wobei $n_i$ der Brechzahlindex des i-ten Brechzahlniveaus der Faser ist und $n_{SIO2}$ der Brechzahlindex einer Faser, bei der der Mantel aus reinem Quarzglas besteht, ist, und daß durch Bemessung der Länge der Kompensationsfaser der mittels der Fluordotierung erreichte positive Dispersionswert auf den für die Kompensation benötigten positiven Dispersionswert für $\lambda$=1300nm erhöht wird und daß für die Längenbemessung der Kompensationsfaser gilt, daß sich der durch die Fluordotierung erzielte Dispersionswert proportional zur Faserlänge erhöht.

2. Verfahren nach Anspruch 1, **dadurch gekennzeichnet, daß** die Verknüpfung der aktiven Faser des Faserlasers mit der Kompensationsfaser durch Spleiße erfolgt.

3. Verfahren nach Anspruch 1, **dadurch gekennzeichnet, daß** die Verknüpfung der aktiven Faser des Faserlasers mit der Kompensationsfaser durch Steckverbindungen erfolgt.

4. Verfahren nach Anspruch 1, **dadurch gekennzeichnet, daß** die aktive Faser des Faserlasers und die mit der aktiven Faser verknüpfte Kompensationsfaser im Laserresonator untergebracht werden.

5. Verfahren nach Anspruch 1, **dadurch gekennzeichnet, daß** durch die Längenänderung der Kompensationsfaser eine definierte Pulsbreite eingestellt wird, deren untere Grenze durch die vollständige Kompensation und deren obere Grenze durch die Dispersion der aktiven Faser des Faserlasers bestimmt wird.

6. Verfahren nach Anspruch 1, **dadurch gekennzeichnet, daß** der stufenförmige Quarzglaskern der Kompensationsfaser aus reinem Quarzglas aufgebaut wird.

7. Verfahren nach Anspruch 1, **dadurch gekennzeichnet, daß** der stufenförmige Quarzglaskern der Kompensationsfaser aus mit Germanium dotierten Quarzglas aufgebaut wird.

8. Verfahren nach Anspruch 1, **dadurch gekennzeichnet, daß** die Absenkung des Grabenniveaus $2\Delta_2$ kleiner minus 2 % und die Stufenhöhe $2\Delta_1 \leq 5\%$ gewählt wird.

**Claims**

1. Method of compensating the dispersion of fluoride-based fibre lasers in the second optical window, the high negative dispersion of the fibre laser in the second optical window being compensated with a compensation fibre, **characterized in that** the active fibre of the fibre laser is linked to a compensation fibre having a step-index quartz glass core which comprises, in its outer layers, a sheathing, the refractive index level of which has been reduced in a targeted manner by fluorine doping to form a refractive index trench, the degree of reduction of the refractive index level of the refractive index trench being determined according to the relation

$$2\Delta_i = \left( \frac{n_i^2 - n_{SIO2}^2}{n_{SIO2}^2} \right)$$

in order to achieve an optimized positive dispersion value of the compensation fibre, $n_i$ being the refractive index of the i-th refractive index level of the fibre and $n_{SIO2}$ being the refractive index of a fibre in which the sheathing consists of pure quartz glass, wherein, by dimensioning the length of the compensation fibre, the positive dispersion value achieved by means of fluorine doping is increased to the positive dispersion value required for compensation for $\lambda$ = 1300nm and wherein, with regard to the dimensioning of the length of the compensation fibre, it applies that the dispersion value achieved by fluorine doping increases in proportion to the length of the fibre.

2. Method according to claim 1, **characterized in that** the linking of the active fibre of the fibre laser to the compensation fibre is accomplished through splices.

3. Method according to claim 1, **characterized in that** the linking of the active fibre of the fibre laser to the compensation fibre is accomplished through plug-in connections.

4. Method according to claim 1, **characterized in that** the active fibre of the fibre laser and the compensation fibre linked to the active fibre are accommodated in the laser resonator.

5. Method according to claim 1, **characterized in that**, by changing the length of the compensation fibre, a defined pulse width is obtained, the lower limit of which is determined by complete compensation and the upper limit of which is determined by the dispersion of the active fibre of the fibre laser.

6. Method according to claim 1, **characterized in that** the step-index quartz glass core of the compensation fibre consists of pure quartz glass.

7. Method according to clam 1, **characterized in that** the step index quartz glass core of the compensation fibre consists of quartz glass doped with germanium.

8. Method according to claim 1, **characterized in that** the reduction of the trench level $2\Delta_2$ is less than minus 2% and the step height $2\Delta_1$ is $\leq 5\%$.

**Revendications**

1. Procédé permettant de compenser la dispersion de lasers de fibres à base de fluorure dans la deuxième fenêtre optique, la dispersion négative élevée du laser de fibres étant compensée dans la deuxième fenêtre optique grâce à une fibre de compensation, **caractérisé en ce que** la fibre active du laser de fibres est reliée à une fibre de compensation qui possède un coeur en verre quartzeux à gradins qui a développé un manteau dans ses couches externes, dont l'indice de réfraction a été abaissé de manière ciblée par dopage au fluorure pour former un fossé d'indice de réfraction, le degré d'abaissement du niveau de l'indice de réfraction du fossé d'indice de réfraction étant déterminé, pour obtenir une valeur de dispersion positive optimisée de la fibre de compensation, selon l'équation

$$2\Delta_i = \left( \frac{n_i^2 - n_{SIO2}^2}{n_{SIO2}^2} \right)$$

$n_i$ étant l'indice de réfraction du $i^{ème}$ niveau d'indice de réfraction de la fibre, et $n_{SIO2}$ étant l'indice de réfraction d'une fibre dont le manteau est constitué par un verre quartzeux pur, et que, en mesurant la longueur de la fibre de compensation, la valeur de dispersion positive atteinte par dopage au florure est augmentée à la valeur de dispersion positive nécessitée pour la compensation pour $\lambda$ = 1300 nm, et que, pour la mesure de la longueur de la fibre de compensation, la valeur de dispersion obtenue par le dopage au fluorure augmente proportionnellement à la longueur de la fibre.

2. Procédé selon la revendication 1, **caractérisé en ce que** le raccordement entre la fibre active du laser de fibres et la fibre de compensation est réalisée au moyen d'épissures.

3. Procédé selon la revendication 1, **caractérisé en ce que** le raccordement entre la fibre active du laser de fibres et la fibre de compensation est réalisée au moyen de connecteurs mâles-femelles.

4. Procédé selon la revendication 1, **caractérisé en ce que** la fibre active du laser de fibres et la fibre de compensation raccordée à la fibre active sont logées dans le résonateur laser.

5. Procédé selon la revendication 1, **caractérisé en ce que**, par la modification de longueur de la fibre de compensation, une largeur d'impulsion définie est réglée, dont la limite inférieure est déterminée par la compensation complète et la limite supérieure par la dispersion de la fibre active du laser de fibres.

6. Procédé selon la revendication 1, **caractérisé en ce que** le coeur de verre quartzeux à gradins de la fibre de compensation est constitué de verre quartzeux pur.

7. Procédé selon la revendication 1, **caractérisé en ce que** le coeur de verre quartzeux à gradins de la fibre de compensation est constitué de verre quartzeux dopé au germanium.

8. Procédé selon la revendication 1, **caractérisé en ce que** l'abaissement du niveau du fossé $2\Delta_2$ choisi est inférieur à moins 2% et la hauteur de niveau $2\Delta_1 \leq 5\%$.

Fig. 1

chromatic dispersion

Fig. 2